# FASCICULE DE BREVET EUROPEEN

(11) **EP 4 513 607 B1**
(45) Date de publication et mention de la délivrance du brevet: **22.07.2026**
(21) Numéro de dépôt: 24196057.4
(22) Date de dépôt: 23.08.2024
(51) Int. Cl.: H01M 10/052, G01N 27/30, G01N 27/403, G01N 27/49, G01R 31/36, H01M 10/058, H01M 10/48, H01M 50/417, H01M 50/426, H01M 50/449, H01M 50/46

(54) **SEPARATEUR SENSITIF POUR CELLULE ELECTROCHIMIQUE PERMETTANT UNE MESURE DE POTENTIEL DE REFERENCE**
SENSORSEPARATOR FÜR ELEKTROCHEMISCHE ZELLE ZUR MESSUNG DES REFERENZPOTENTIALS
SENSITIVE SEPARATOR FOR AN ELECTROCHEMICAL CELL FOR MEASURING THE REFERENCE POTENTIAL

(30) Priorité: 23.08.2023 FR 2308871
(43) Date de publication de la demande: 26.02.2025
(73) Titulaire: Renault s.a.s, 92100 Boulogne Billancourt (FR)
(72) Inventeur: MIR, Caroline, 78084 GUYANCOURT (FR); MOLLICA, Fabien, 78084 GUYANCOURT (FR)
(74) Mandataire: Renault Group

(56) Documents cités:
- EP-A1- 2 442 400
- DE-A1- 102015 200 685
- DE-A1- 102017 216 518
- US-B2- 11 302 955

## Description

La présente invention concerne le domaine des batteries à cellules électrochimiques.

En particulier, l'invention concerne la mesure de la capacité et de la tension d'une cellule électrochimique et plus spécifiquement d'une cellule électrochimique de type pouch.

Une cellule électrochimique de type pouch comprend une électrode positive appelée cathode (en décharge), une électrode négative appelée anode (en décharge), et un séparateur poreux imbibé d'électrolyte liquide ou gélatineux. Un sachet souple enveloppe la cellule et, afin d'éviter un court-circuit, un séparateur est mis en place entre l'électrode positive et l'électrode négative.

Cette configuration permet la mise en place de réactions chimiques d'oxydo-réduction qui sont à l'origine du stockage et de la production d'électrons, donc d'électricité.

Un pack batterie comprend plusieurs modules, eux-mêmes composés de plusieurs cellules électrochimiques de type pouch mises en série ou en parallèle.

De manière classique, on mesure la capacité et la tension d'une cellule électrochimique aux bornes des électrodes positive et négative. Cependant, cette mesure ne permet pas d'avoir la contribution respective de chacune des électrodes. L'insertion d'une troisième électrode au sein d'une cellule devient donc nécessaire. Cette électrode, dite de référence, permet d'avoir une première mesure de la capacité et de la tension entre ladite électrode de référence et l'électrode positive, puis une deuxième mesure de la capacité et de la tension entre ladite électrode de référence et l'électrode négative.

On pourra se référer au document FR 2 986 867 qui décrit un procédé de fabrication et un dispositif de stockage d'énergie utilisant une électrode de référence disposée à l'intérieur du dispositif de stockage d'énergie.

On pourra également se référer au document FR 3 013 511 qui décrit également un système électrochimique comprenant une électrode de comparaison qui peut être positionnée à plusieurs endroits de la cellule et notamment à l'intérieur d'un séparateur.

On pourra encore se référer au document US 11 302 955 qui propose l'utilisation d'une électrode de référence filaire, composée de cuivre et recouverte d'une couche de lithium et de polymère conducteur. Cette électrode filaire est insérée entre l'anode et la cathode. Cette insertion n'est pas contrôlée et est invasive, ce qui implique une faible reproductibilité quant à l'alignement et la position de l'électrode ainsi que des contraintes mécaniques.

Les documents DE 10 2015 200 685 A1, EP 2 442 400 A1 ou bien DE 10 2017 216 518 A1 divulguent une batterie pour véhicule comprenant une première électrode, une deuxième électrode, un séparateur (substrat) isolant les électrodes, et une électrode de référence disposée entre les électrodes et adjacente au séparateur.

L'utilisation d'une électrode de référence permet d'avoir une précision supérieure dans la mesure de l'énergie délivrée par la batterie, de connaître la contribution exacte de chacune des électrodes positive et négative, et ainsi d'avoir un suivi du vieillissement des électrodes, et d'adopter une meilleure utilisation de la cellule.

La troisième électrode ne doit pas perturber le fonctionnement de la cellule et, pour une utilisation optimale de cette configuration, il est important de prendre en compte certains facteurs, tels que la géométrie de l'électrode de référence, sa composition, son emplacement au sein de la cellule...

En outre, le raccordement électrique de l'électrode de référence peut engendrer des risques d'endommagement des matériaux du séparateur, comprenant généralement du polymère.

De plus, l'intégration d'une électrode de référence dans une cellule peut engendrer des problèmes sécuritaires tels qu'une fuite d'électrolyte, des courts-circuits ou encore une fuite de gaz.

La présente invention a pour but de pallier ces inconvénients.

L'invention a donc pour objet une cellule électrochimique comprenant une cathode, une anode et un dispositif de séparation de la cathode et de l'anode. Le dispositif de séparation comprend un substrat en contact avec l'une de la cathode et de l'anode, une couche de protection en contact avec l'autre de la cathode et de l'anode, et une électrode de référence positionnée entre le substrat et la couche de protection.

Selon une première conception, le substrat est en contact avec la cathode, et la couche de protection est en contact avec l'anode. Selon une deuxième conception, le substrat est en contact avec l'anode, et la couche de protection est en contact avec la cathode.

Selon un mode de réalisation, le substrat comprend un film polymère isolant électrique et conducteur ionique.

Avantageusement, le substrat comprend une surface supérieure au moins partiellement en contact avec une surface de l'électrode de référence, et une surface inférieure en contact avec une surface de l'une de l'anode et de la cathode s'étendant entre 0 et 5 centimètres, de préférence entre 0 et 3 centimètres, plus préférentiellement entre 0 et 1 centimètre de plus que ladite surface de l'anode ou de la cathode selon deux directions orthogonales.

Selon un mode de réalisation, la cellule électrochimique comprend une connectique électrique, et l'électrode de référence comprend une couche conductrice au moins partiellement mise à nue et mise en contact électriquement avec la connectique électrique de la cellule électrochimique.

Avantageusement, la couche de protection comprend un polymère comprenant de la polyoléfine et/ou du PTFE et/ou du PVDF, et comprend une surface en contact avec une surface de l'anode ou de la cathode, ladite surface permettant la mise à niveau du dispositif de séparation.

Préférentiellement, l'électrode de référence comprend un empilement d'une couche d'accroche, d'une couche conductrice, et d'une couche à potentiel électrique prédéterminé, ladite couche d'accroche étant positionnée entre le substrat et la couche conductrice et ladite couche conductrice étant au moins partiellement mise à nue.

Avantageusement, la couche de protection comprend une surface en contact avec la surface supérieure du substrat, une surface en contact avec la couche à potentiel électrique prédéterminé de l'électrode de référence, et une surface en contact avec la couche conductrice de l'électrode de référence.

L'invention a aussi pour objet une batterie comprenant un ensemble de cellules électrochimiques telles que définies ci-dessus, comprenant un dispositif de séparation commun.

L'invention a encore pour objet un véhicule automobile comprenant au moins une batterie telle que définie ci-dessus.

L'invention a encore pour objet un procédé de fabrication d'un dispositif de séparation d'une cathode et d'une anode d'une cellule électrochimique d'une batterie. Ce procédé comprend au moins les étapes suivantes :
- installation d'un substrat comprenant une surface inférieure au moins partiellement en contact avec une surface de l'une de l'anode et de la cathode s'étendant entre 0 et 5 centimètres de plus que ladite surface de l'anode ou de la cathode selon deux directions orthogonales, de préférence entre 0 et 3 centimètres, plus préférentiellement entre 0 et 1 centimètre de plus que ladite surface de l'anode ou de la cathode selon deux directions orthogonales,
- empilement d'une électrode de référence sur le substrat, cette électrode de référence comprenant un empilement d'une couche d'accroche, d'une couche conductrice, et d'une couche à potentiel électrique prédéterminé, ladite couche d'accroche étant positionnée entre le substrat et la couche conductrice, le substrat comprenant une surface supérieure au moins partiellement en contact avec une surface de la couche d'accroche de l'électrode de référence, la couche conductrice de l'électrode de référence étant au moins partiellement mise à nue,
- ajout d'une couche de protection positionnée sur l'assemblage du substrat et de l'électrode de référence, la couche de protection comprenant une surface en contact avec une surface de l'anode ou de la cathode permettant la mise à niveau du dispositif de séparation, une surface en contact avec la surface supérieure du substrat, une surface en contact avec la couche à potentiel électrique prédéterminé de l'électrode de référence, et une surface en contact avec la couche conductrice de l'électrode de référence.

D'autres buts, caractéristiques et avantages de l'invention apparaîtront à la lecture de la description suivante, donnée uniquement à titre d'exemple non limitatif et faite en référence aux dessins annexés sur lesquels :
- La [Fig. 1] est une vue schématique de face d'une cellule électrochimique de type pouch comprenant une électrode de référence intégrée dans un dispositif de séparation ;
- La [Fig. 2] est une vue schématique en coupe d'une cellule électrochimique de type pouch comprenant une électrode de référence intégrée dans un dispositif de séparation ;
- La [Fig. 3] représente schématiquement un dispositif de séparation sensitif d'une cellule électrochimique de type pouch ;
- La [Fig. 4] représente schématiquement le procédé de fabrication d'un dispositif de séparation sensitif d'une cellule électrochimique de type pouch ;
- La [Fig. 5] est une vue schématique latérale en coupe de la mise en contact électrique d'une électrode de référence intégrée dans un dispositif de séparation ;
- La [Fig. 6] est une vue schématique de face de la mise en contact électrique d'une électrode de référence intégrée dans un dispositif de séparation ; et
- La [Fig. 7] représente plusieurs variantes de positionnement d'une ou de plusieurs électrodes de référence dans un dispositif de séparation.

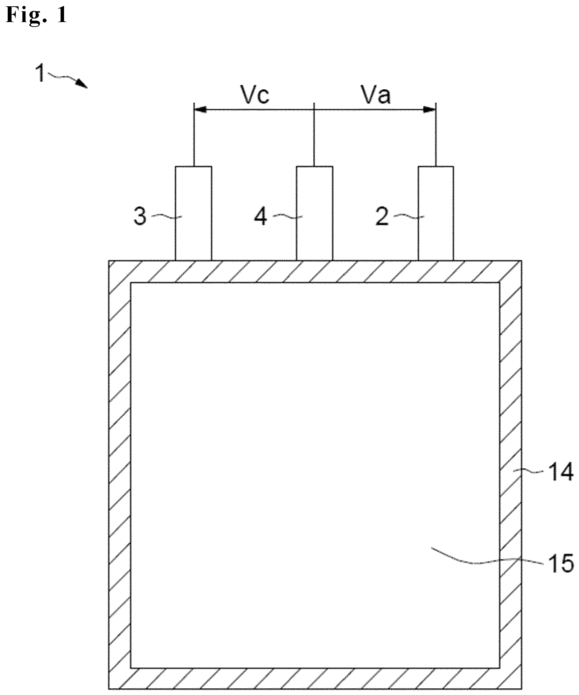

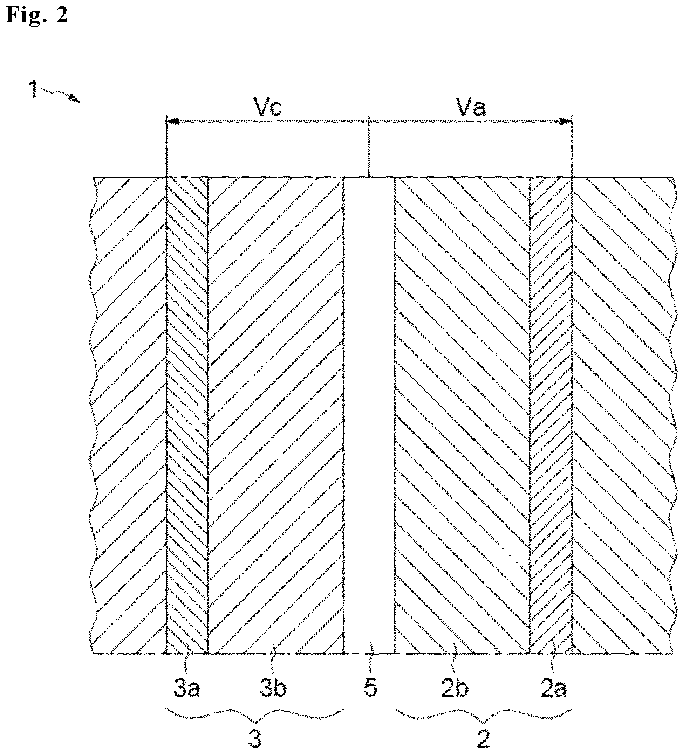

On a représenté sur les figures 1 et 2 la structure générale d'une cellule électrochimique 1 d'une batterie comprenant une électrode négative appelée anode 2, une électrode positive appelée cathode 3 et une électrode de référence 4 intégrée dans un dispositif de séparation 5. L'anode 2 comprend des matériaux de polarité négative 2b en contact avec un collecteur 2a des courants électriques générés à l'anode 2, et la cathode 3 comprend et des matériaux de polarité positive 3b en contact avec un collecteur 3a des courants électriques générés à la cathode 3.

L'électrode de référence 4 est dotée d'un potentiel électrique prédéterminé dans les conditions d'utilisation de la cellule 1.

Une telle configuration permet de mesurer la tension Vc, comprise entre la cathode 3 et l'électrode de référence 4, et la tension Va, comprise entre l'anode 2 et l'électrode de référence 4. La capacité de la cellule 1 peut ainsi être déterminée. Plusieurs autres mesures peuvent être effectuées aux bornes de l'anode 2, de la cathode 3 et de l'électrode de référence 4.

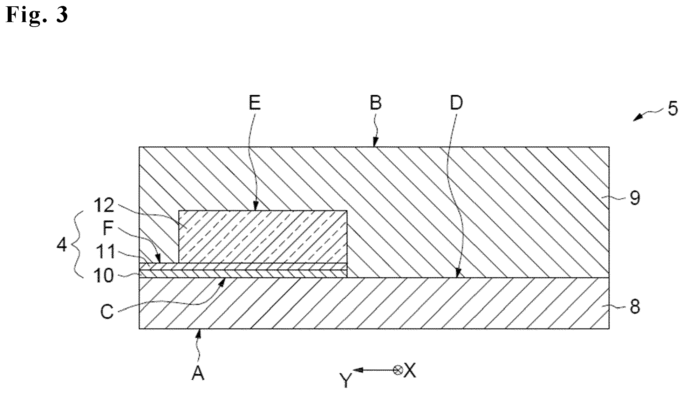

En référence à la figure 3, le dispositif de séparation 5 comprend un substrat 8, une électrode de référence 4, et une couche de protection 9, l'électrode de référence 4 étant positionnée entre le substrat 8 et la couche de protection 9.

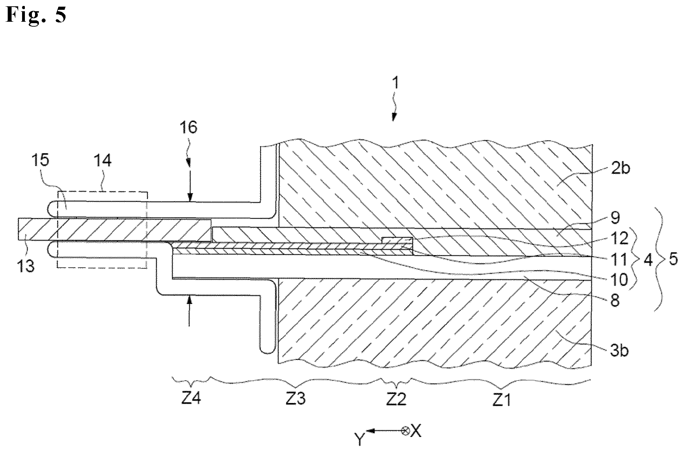

Le dispositif de séparation 5 est positionné entre l'anode 2 et la cathode 3, l'une étant en contact avec une surface inférieure A du substrat 8, et l'autre étant en contact avec une surface B de la couche de protection 9. La surface inférieure A du substrat 8 s'étend entre 0 et 5 centimètres de plus que la surface de l'anode 2 ou de la cathode 3, selon deux directions orthogonales X, Y. De préférence, la surface inférieure A du substrat 8 s'étend entre 0 et 3 centimètres et plus préférentiellement entre 0 et 1 centimètre de plus que la surface de l'anode 2 ou de la cathode 3, selon deux directions orthogonales X, Y. La figure 5 illustre également le dispositif de séparation sensitif d'une cellule électrochimique selon un vision plus large.

Le substrat 8 est un parallélépipède rectangulaire qui comprend un film polymère électriquement isolant et conducteur ionique. Il comprend également une surface supérieure C qui est au moins partiellement en contact avec une surface de l'électrode de référence 4.

Tel qu'illustré sur la figure 3, l'électrode de référence 4 comprend un empilement successif de plusieurs couches, dont une couche inférieure d'accroche 10, une couche intermédiaire conductrice 11, et une couche supérieure à potentiel électrique prédéterminé 12, la couche d'accroche 10 permettant une bonne adhésion de la couche conductrice 11 sur le substrat 8.

La couche de protection 9 comprend un polymère comprenant de la polyoléfine et/ou du PTFE et/ou du PVDF. Elle comprend également une surface D au moins partiellement en contact avec une partie de la surface supérieure C du substrat 8, une surface E en contact avec la couche à potentiel prédéterminé 12 de l'électrode de référence 4, et une surface F en contact avec la couche conductrice 11 de l'électrode de référence 4. La surface C de la couche de protection 9 est plane et permet la mise à niveau du dispositif de séparation 5. En effet, la couche de protection 9 s'emboîte parfaitement sur le substrat 8 et l'électrode de référence 4, régulant ainsi les inégalités de niveau créées par l'assemblage du substrat 8 et de l'électrode de référence 4.

La surface F de la couche de protection 9 ne recouvre pas entièrement la couche conductrice 11 de l'électrode de référence 4. En effet, le dispositif de séparation 5 comporte une zone Z4, visible sur la figure 5, essentiellement constituée du substrat et de la couche conductrice 11. Cet agencement permet à la couche conductrice 11 d'avoir une partie mise à nue utilisée pour connecter électriquement l'électrode de référence 4.

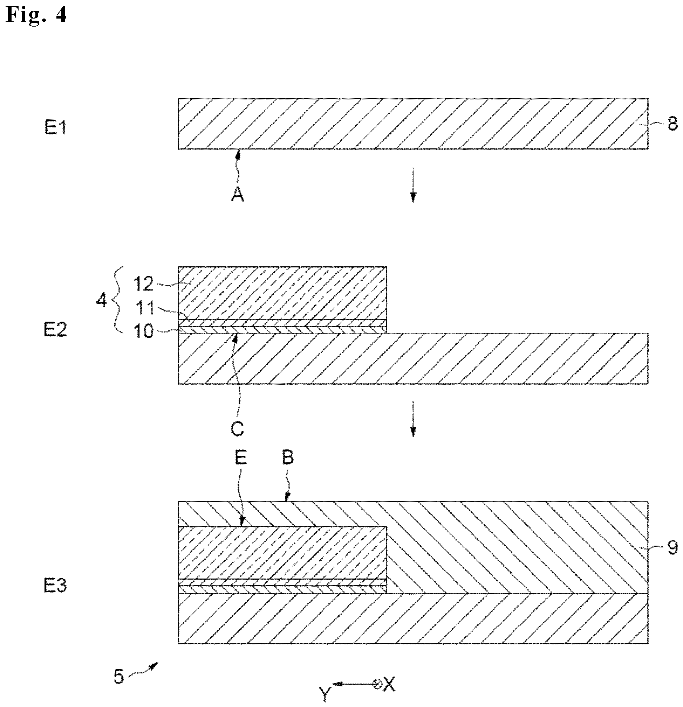

La figure 4 montre les étapes du processus d'assemblage des composants formant le dispositif de séparation sensitif 5 d'une cellule électrochimique 1.

La première étape E1 consiste en l'installation du substrat 8. La surface inférieure A du substrat 8 est disposée sur une surface de l'anode 2 ou de la cathode 3, et la surface supérieure C du substrat 8 est libre. La surface inférieure A est conçue pour s'étendre entre 0 et 5 centimètres de plus que la surface de l'anode 2 ou de la cathode 3, selon deux directions orthogonales X, Y et plus préférentiellement entre 0 et 1 centimètre.

Ensuite, lors de la deuxième étape E2 les différentes couches de l'électrode de référence 4, à savoir la couche d'accroche 10, la couche conductrice 11 puis la couche à potentiel électrique prédéterminé 12, sont empilées par-dessus le substrat 8. Selon un mode de réalisation, la couche d'accroche 10 et la couche conductrice 11 sont positionnées de manière qu'une extrémité de la couche d'accroche 10 soit superposée sur le point haut central de la surface supérieure C du substrat 8.

La couche conductrice 11 recouvre une partie du substrat 8 selon la direction Y et son extrémité inférieure se positionne au niveau du point central de la surface supérieure C du substrat 8. La couche à potentiel prédéterminé 12 est positionnée par-dessus la couche conductrice 11.

Selon un mode de réalisation, la couche à potentiel prédéterminé 12 est placée sur l'extrémité inférieure de la couche conductrice 11. La couche à potentiel prédéterminé 12 ne recouvre pas entièrement couche conductrice 11, et l'électrode de référence 4 ne recouvre donc pas l'entièreté de la surface supérieure C du substrat 8.

Pour finir, lors de la troisième étape E3, la couche de protection 11 est ajoutée par-dessus l'assemblage du substrat 8 et de l'électrode de référence 4. La couche de protection 9 ne recouvre cependant pas entièrement la couche conductrice 11 afin de laisser une partie de ladite couche conductrice 11 mise à nu. Finalement, cette couche de protection 9 est ajoutée par-dessus l'assemblage du substrat 8 et de l'électrode de référence 4 afin d'éviter un contact entre l'une de l'anode 2 et de la cathode 3 et ladite électrode de référence 4, et pour permettre la mise à niveau du dispositif de séparation 5.

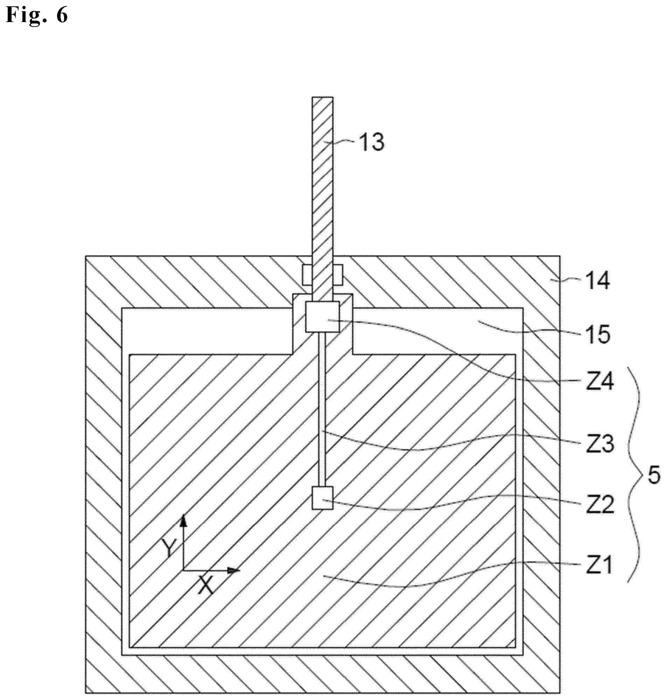

Une fois l'assemblage du dispositif de séparation 5 effectué, on obtient un dispositif comprenant plusieurs zones, avec des empilements de couches différents, illustrés sur les figures 5 et 6.

Dans une première zone Z1, on retrouve la combinaison du substrat 8 et de la couche de protection 9 qui permet le passage des ions lors des réactions chimiques entre l'anode 2 et la cathode 3.

Dans une deuxième zone Z2, toutes les couches sont présentes, le substrat 8, les trois couches de l'électrode de référence 4, et la couche de protection 9. C'est dans cette zone Z2 que la mesure du potentiel local est effectuée.

La troisième zone Z3 comprend le substrat 8, la couche d'accroche 10 et la couche conductrice 11 de l'électrode de référence 4, et la couche de protection 9. Cette zone Z3 permet la conduction du courant jusqu'à la partie mise à nue de la couche conductrice 11.

Finalement, dans la quatrième zone Z4 se trouve la combinaison du substrat 8, de la couche d'accroche 10 et de la couche conductrice 11 de l'électrode de référence 4.

Lorsque le dispositif de séparation 5 est assemblé avec une cellule électrochimique, la partie mise à nue de la couche conductrice 11 de l'électrode de référence 4 est mise en contact avec une connectique électrique 13 par juxtaposition, et l'électrode de référence 4 est électriquement connectée.

La cellule électrochimique 1 comprend également une zone de thermo-scellage 14 et un film d'emballage 15 étanche souple permettant d'envelopper et de protéger la connexion entre ladite connectique électrique 13 et la couche conductrice 11 de l'électrode de référence 4. La juxtaposition entre la connectique électrique 13 et la couche conductrice 11 est maintenue par pression 16 opérée par le film d'emballage 15 de protection.

Une soudure ne peut par ailleurs pas être pratiquée au niveau de la connexion entre la couche conductrice 11 de l'électrode de référence 4 et la connectique électrique 13 de la cellule électrochimique 1, car le substrat 8 risque d'être endommagé puisqu'il est en matériaux polymères.

Selon un mode de réalisation, la connectique 13 est une connectique différente des connectiques de l'anode 2 et de la cathode 3, utilisée spécialement pour l'électrode de référence 4. Selon un autre mode de réalisation, la cellule électrochimique comprend seulement les connectiques de l'anode 2 et de la cathode 3, parmi lesquelles au moins une est adaptée pour connecter électriquement l'électrode de référence 4.

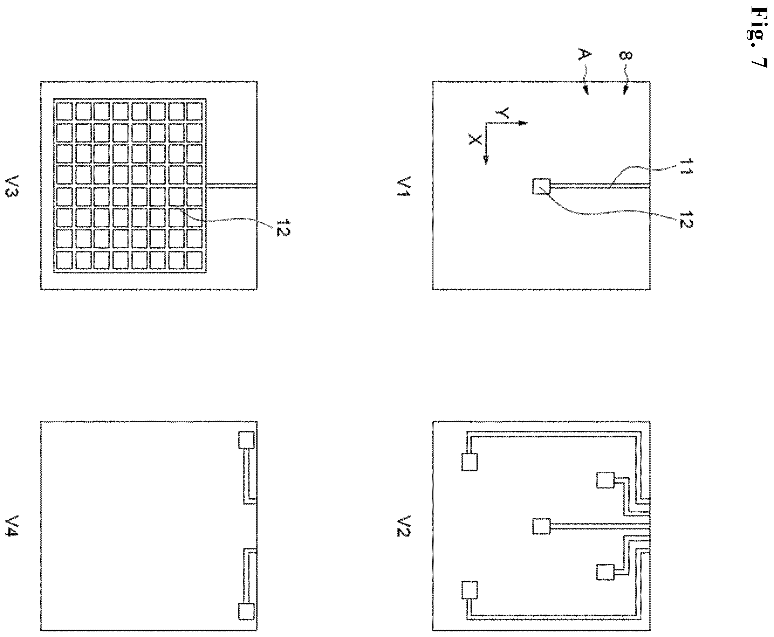

La figure 7 montre plusieurs variantes de réalisation d'un dispositif de séparation 5 selon l'invention. Une ou plusieurs électrodes de référence 4 peuvent être insérées dans un dispositif de séparation 5, selon plusieurs modèles.

La première variante V1 est le mode de réalisation décrit précédemment, avec une électrode de référence 4 positionnée sur la surface supérieure C du substrat 8, depuis le point central de la surface supérieure C jusqu'au point haut central de la surface supérieure C.

La deuxième variante V2 montre un mode de réalisation avec cinq électrodes de références 4 positionnées à plusieurs points de la surface supérieure C du substrat 8.

La troisième variante V3 illustre une électrode de référence 4 en grille couvrant une grande partie de la surface supérieure C du substrat 8, et la quatrième variante V4 montre un mode de réalisation où deux électrodes de référence 4 sont placées sur le côté haut, aux extrémités de la surface supérieure C du substrat 8.

Ces différentes configurations permettent d'apporter une flexibilité quant à la manière de construire le dispositif de séparation 5. Différentes mesures à différents points stratégiques de la cellule 1 peuvent être prises.

Le dispositif de séparation 5 de l'anode 2 et de la cathode 3 a une forme adaptée pour correspondre à une cellule électrochimique 1 de type pouch de la batterie, et le risque de fuite d'électrolyte, de fuite de gaz ou bien de court-circuit est évité. Enfin, les mesures prises selon les positions de l'électrode de référence 4, ou des électrodes de référence 4, apportent une meilleure précision sur la capacité et la tension pouvant être délivrées par la batterie.

## Revendications

1. Cellule électrochimique (1) comprenant une cathode (3), une anode (2) et un dispositif de séparation (5) de la cathode (3) et de l'anode (2), **caractérisée en ce que** le dispositif de séparation (5) comprend un substrat (8) en contact avec l'une de la cathode (3) et de l'anode (2), une couche de protection (9) en contact avec l'autre de la cathode (3) et de l'anode (2), et une électrode de référence (4) positionnée entre le substrat (8) et la couche de protection (9), ladite couche de protection (9) comprenant une surface (B) en contact avec une surface de l'anode (2) ou de la cathode (3), ladite surface permettant la mise à niveau du dispositif de séparation (5).

2. Cellule électrochimique (1) selon la revendication 1, dans laquelle le substrat (8) comprend un film polymère isolant électrique et conducteur ionique.

3. Cellule électrochimique (1) selon l'une des revendications 1 et 2, dans laquelle le substrat (8) comprend une surface supérieure (C) au moins partiellement en contact avec une surface de l'électrode de référence (4), et une surface inférieure (A) en contact avec une surface de l'une de l'anode (2) et de la cathode (3) s'étendant entre 0 et 5 centimètres de plus que ladite surface de l'anode (2) ou de la cathode (3) selon deux directions orthogonales (X, Y).

4. Cellule électrochimique (1) selon l'une quelconque des revendications 1 à 3, comprenant une connectique électrique (13), l'électrode de référence (4) comprenant une couche conductrice (11) au moins partiellement mise à nue et mise en contact électriquement avec la connectique électrique (13) de la cellule électrochimique (1).

5. Cellule électrochimique (1) selon l'une quelconque des revendications 1 à 4, dans laquelle la couche de protection (9) comprend un polymère comprenant de la polyoléfine et/ou du PTFE et/ou du PVDF, et comprend une surface (B) en contact avec une surface de l'anode (2) ou de la cathode (3), ladite surface permettant la mise à niveau du dispositif de séparation (5).

6. Cellule électrochimique (1) selon l'une quelconque des revendications 1 à 5, dans laquelle l'électrode de référence (4) comprend un empilement d'une couche d'accroche (10), d'une couche conductrice (11), et d'une couche à potentiel électrique prédéterminé (12), ladite couche d'accroche (10) étant positionnée entre le substrat (8) et la couche conductrice (11) et ladite couche conductrice étant au moins partiellement mise à nue.

7. Cellule électrochimique (1) selon la revendication 6, dans laquelle la couche de protection (9) comprend une surface (D) en contact avec la surface supérieure (C) du substrat (8), une surface (E) en contact avec la couche à potentiel électrique prédéterminé (12) de l'électrode de référence (4), et une surface (F) en contact avec la couche conductrice (11) de l'électrode de référence (4).

8. Batterie comprenant un ensemble de cellules électrochimiques (1) comprenant un dispositif de séparation (5) commun, selon l'une quelconque des revendications 1 à 7.

9. Véhicule automobile comprenant au moins une batterie selon la revendication 8.

10. Procédé de fabrication d'un dispositif de séparation (5) d'une cathode (3) et d'une anode (1) d'une cellule électrochimique (1) d'une batterie, **caractérisé en ce qu'**il comprend au moins les étapes suivantes :
• installation d'un substrat (8) comprenant une surface inférieure (A) au moins partiellement en contact avec une surface de l'une de l'anode (2) et de la cathode (3) s'étendant entre 0 et 5 centimètres de plus que ladite surface de l'anode (2) ou de la cathode (3) selon deux directions orthogonales (X, Y),
• empilement d'une électrode de référence (4) sur le substrat (8), cette électrode de référence (4) comprenant un empilement d'une couche d'accroche (10), d'une couche conductrice (11), et d'une couche à potentiel électrique prédéterminé (12), ladite couche d'accroche (10) étant positionnée entre le substrat (8) et la couche conductrice (11), le substrat (8) comprenant une surface supérieure (C) au moins partiellement en contact avec une surface de la couche d'accroche (10) de l'électrode de référence (4), la couche conductrice (11) de l'électrode de référence (4) étant au moins partiellement mise à nue,
• ajout d'une couche de protection (9) positionnée sur l'assemblage du substrat (8) et de l'électrode de référence (4), la couche de protection (9) comprenant une surface (B) en contact avec une surface de l'anode (2) ou de la cathode (3) permettant la mise à niveau du dispositif de séparation (5), une surface (D) en contact avec la surface supérieure (C) du substrat (8), une surface (E) en contact avec la couche à potentiel électrique prédéterminé (12) de l'électrode de référence (4), et une surface (F) en contact avec la couche conductrice (11) de l'électrode de référence (4).

## Patentansprüche

1. Elektrochemische Zelle (1), umfassend eine Kathode (3), eine Anode (2) und eine Separationsvorrichtung (5) zur Separation der Kathode (3) und der Anode (2), **dadurch gekennzeichnet, dass** die Separationsvorrichtung (5) ein Substrat (8), das mit der einen der Kathode (3) und der Anode (2) in Kontakt steht, eine Schutzschicht (9), die mit der anderen der Kathode (3) und der Anode (2) in Kontakt steht, und eine Referenzelektrode (4), die zwischen dem Substrat (8) und der Schutzschicht (9) positioniert ist, umfasst, wobei die Schutzschicht (9) eine Fläche (B) umfasst, die mit einer Fläche der Anode (2) oder der Kathode (3) in Kontakt ist, wobei die Fläche die Egalisierung der Separationsvorrichtung (5) ermöglicht.

2. Elektrochemische Zelle (1) nach Anspruch 1, wobei das Substrat (8) eine elektrisch isolierende und ionenleitende Polymerfolie umfasst.

3. Elektrochemische Zelle (1) nach einem der Ansprüche 1 und 2, wobei das Substrat (8) eine obere Fläche (C), die mindestens teilweise mit einer Fläche der Referenzelektrode (4) in Kontakt ist, und eine untere Fläche (A), die mit einer Fläche der einen der Anode (2) und der Kathode (3) in Kontakt ist und sich zwischen 0 und 5 Zentimeter weiter als die Fläche der Anode (2) oder der Kathode (3) in zwei orthogonalen Richtungen (X, Y) erstreckt, umfasst.

4. Elektrochemische Zelle (1) nach einem der Ansprüche 1 bis 3, die einen elektrischen Anschluss (13) umfasst, wobei die Referenzelektrode (4) eine leitende Schicht (11) umfasst, die mindestens teilweise freigelegt ist und mit dem elektrischen Anschluss (13) der elektrochemischen Zelle (1) elektrisch in Kontakt gebracht ist.

5. Elektrochemische Zelle (1) nach einem der Ansprüche 1 bis 4, wobei die Schutzschicht (9) ein Polymer umfasst, das ein Polyolefin und/oder PTFE und/oder PVDF umfasst, und eine Fläche (B) umfasst, die mit einer Fläche der Anode (2) oder der Kathode (3) in Kontakt ist, wobei die Fläche das Egalisieren der Separationsvorrichtung (5) ermöglicht.

6. Elektrochemische Zelle (1) nach einem der Ansprüche 1 bis 5, wobei die Referenzelektrode (4) einen Stapel aus einer Haftschicht (10), einer leitenden Schicht (11) und einer Schicht (12) mit vorbestimmtem elektrischem Potential umfasst, wobei die Haftschicht (10) zwischen dem Substrat (8) und der leitenden Schicht (11) positioniert ist und wobei die leitende Schicht mindestens teilweise freigelegt ist.

7. Elektrochemische Zelle (1) nach Anspruch 6, wobei die Schutzschicht (9) eine Fläche (D), die mit der oberen Fläche (C) des Substrats (8) in Kontakt ist, eine Fläche (E), die mit der Schicht (12) mit vorbestimmtem elektrischem Potential der Referenzelektrode (4) in Kontakt ist, und eine Fläche (F), die mit der leitenden Schicht (11) der Referenzelektrode (4) in Kontakt ist, umfasst.

8. Batterie, umfassend einen Satz elektrochemischer Zellen (1), die eine gemeinsame Separationsvorrichtung (5) nach einem der Ansprüche 1 bis 7 umfassen.

9. Kraftfahrzeug, das mindestens eine Batterie nach Anspruch 8 umfasst.

10. Verfahren zur Herstellung einer Separationsvorrichtung (5) zur Separation einer Kathode (3) und einer Anode (1) einer elektrochemischen Zelle (1) einer Batterie, **dadurch gekennzeichnet, dass** es mindestens die folgenden Schritte umfasst:
• Installation eines Substrats (8), das eine untere Fläche (A), die mindestens teilweise mit einer Fläche der einen der Anode (2) und Kathode (3) in Kontakt ist und sich zwischen 0 und 5 Zentimeter weiter als die Fläche der Anode (2) oder der Kathode (3) in zwei orthogonalen Richtungen (X, Y) erstreckt,
• Stapeln einer Referenzelektrode (4) auf das Substrat (8), wobei diese Referenzelektrode (4) einen Stapel aus einer Haftschicht (10), einer leitenden Schicht (11) und einer Schicht (12) mit vorbestimmtem elektrischem Potential umfasst, wobei die Haftschicht (10) zwischen dem Substrat (8) und der leitenden Schicht (11) positioniert ist, wobei das Substrat (8) eine obere Fläche (C) umfasst, die mindestens teilweise mit einer Fläche der Haftschicht (10) der Referenzelektrode (4) in Kontakt ist, wobei die leitende Schicht (11) der Referenzelektrode (4) mindestens teilweise freigelegt ist,
• Hinzufügen einer Schutzschicht (9), die auf der Einheit aus dem Substrat (8) und der Referenzelektrode (4) positioniert ist, wobei die Schutzschicht (9) eine Fläche (B), die mit einer Fläche der Anode (2) oder der Kathode (3) in Kontakt ist und das Egalisieren der Separationsvorrichtung (5) ermöglicht, eine Fläche (D), die mit der oberen Fläche (C) des Substrats (8) in Kontakt ist, eine Fläche (E), die mit der Schicht mit vorbestimmtem elektrischem Potential (12) der Referenzelektrode (4) in Kontakt ist, und eine Fläche (F), die mit der leitenden Schicht (11) der Referenzelektrode (4) in Kontakt ist, umfasst.

## Claims

1. Electrochemical cell (1) comprising a cathode (3), an anode (2) and a device (5) for separating the cathode (3) and the anode (2), **characterized in that** the separation device (5) comprises a substrate (8) in contact with one of the cathode (3) and the anode (2), a protective layer (9) in contact with the other of the cathode (3) and the anode (2), and a reference electrode (4) positioned between the substrate (8) and the protective layer (9), said protective layer (9) comprising a surface (B) in contact with a surface of the anode (2) or of the cathode (3), said surface enabling the levelling of the separation device (5).

2. Electrochemical cell (1) according to Claim 1, wherein the substrate (8) comprises an electrically insulating and ion-conducting polymer film.

3. Electrochemical cell (1) according to one of Claims 1 and 2, wherein the substrate (8) comprises an upper surface (C) at least partially in contact with a surface of the reference electrode (4), and a lower surface (A) in contact with a surface of one of the anode (2) and the cathode (3) and extending between 0 and 5 centimetres further than said surface of the anode (2) or of the cathode (3) along two orthogonal directions (X, Y).

4. Electrochemical cell (1) according to any one of Claims 1 to 3, comprising an electrical connection (13), the reference electrode (4) comprising a conductive layer (11) that is at least partially exposed and electrically contacted with the electrical connection (13) of the electrochemical cell (1).

5. Electrochemical cell (1) according to any one of Claims 1 to 4, wherein the protective layer (9) comprises a polymer comprising polyolefin and/or PTFE and/or PVDF, and comprises a surface (B) in contact with a surface of the anode (2) or of the cathode (3), said surface enabling the levelling of the separation device (5).

6. Electrochemical cell (1) according to any one of Claims 1 to 5, wherein the reference electrode (4) comprises a stack of a tie layer (10), a conductive layer (11), and a layer having a predetermined electric potential (12), said tie layer (10) being positioned between the substrate (8) and the conductive layer (11) and said conductive layer being at least partially exposed.

7. Electrochemical cell (1) according to Claim 6, wherein the protective layer (9) comprises a surface (D) in contact with the upper surface (C) of the substrate (8), a surface (E) in contact with the layer having a predetermined electric potential (12) of the reference electrode (4), and a surface (F) in contact with the conductive layer (11) of the reference electrode (4).

8. Battery comprising an assembly of electrochemical cells (1) comprising a common separation device (5) according to any one of Claims 1 to 7.

9. Motor vehicle comprising at least one battery according to Claim 8.

10. Method for manufacturing a device (5) for separating a cathode (3) and an anode (1) of an electrochemical cell (1) of a battery, **characterized in that** it comprises at least the following steps:
• installation of a substrate (8) comprising a lower surface (A) at least partially in contact with a surface of one of the anode (2) and the cathode (3) and extending between 0 and 5 centimetres further than said surface of the anode (2) or of the cathode (3) along two orthogonal directions (X, Y),
• stacking of a reference electrode (4) on the substrate (8), this reference electrode (4) comprising a stack of a tie layer (10), a conductive layer (11), and a layer having a predetermined electric potential (12), said tie layer (10) being positioned between the substrate (8) and the conductive layer (11), the substrate (8) comprising an upper surface (C) at least partially in contact with a surface of the tie layer (10) of the reference electrode (4), the conductive layer (11) of the reference electrode (4) being at least partially exposed,
• addition of a protective layer (9) positioned on the assembly of the substrate (8) and the reference electrode (4), the protective layer (9) comprising a surface (B) in contact with a surface of the anode (2) or of the cathode (3) enabling the levelling of the separation device (5), a surface (D) in contact with the upper surface (C) of the substrate (8), a surface (E) in contact with the layer having a predetermined electric potential (12) of the reference electrode (4), and a surface (F) in contact with the conductive layer (11) of the reference electrode (4).
